# EUROPEAN PATENT APPLICATION

(11) **EP 4 557 338 A1**
(43) Date of publication of application: **21.05.2025**
(21) Application number: 24206138.0
(22) Date of filing: 11.10.2024
(51) Int. Cl.: H01G 4/30, H01G 4/008, H01G 4/012, H01G 4/232

(54) **MULTILAYER ELECTRONIC COMPONENT**

(30) Priority: 16.11.2023 KR 20230158968
(71) Applicant: Samsung Electro-Mechanics Co., Ltd., Gyeonggi-do (KR)
(72) Inventor: Im, Sung Been, Suwon-si, Gyeonggi-do (KR); Lee, Dae Hee, Suwon-si, Gyeonggi-do (KR)
(74) Representative: Grünecker Patent- und Rechtsanwälte PartG mbB

(57) **Abstract**

A multilayer electronic component includes: a body including a dielectric layer and internal electrodes; and an external electrode disposed on the body, wherein the external electrode may include a connection electrode layer disposed on the body and connected to the internal electrodes and including a conductive metal, a band electrode layer in contact with the connection electrode layer and disposed on the body and including a conductive polymer, and a plating layer disposed on the connection electrode layer and the band electrode layer, and the conductive metal may include at least one selected from the group consisting of palladium (Pd), silver (Ag), rhodium (Rh), and ruthenium (Ru).

## Description

### CROSS-REFERENCE TO RELATED APPLICATION(S)

This application claims benefit of priority to Korean Patent Application No. 10-2023-0158968 filed on November 16, 2023, in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, is a chip-type condenser, mounted on the printed circuit boards of various types of electronic product, such as image display devices including a liquid crystal display (LCD) and a plasma display panel (PDP), computers, smartphones and mobile phones, and serves to charge or discharge electricity therein or therefrom.

The multilayer ceramic capacitor may be used as a component in various electronic devices due to having a small size, ensuring high capacitance and being easily mounted. With the miniaturization and implementation of high output power of various electronic devices such as computers and mobile devices, demand for miniaturization and high capacitance of multilayer ceramic capacitors has also been increasing.

The range of application of such multilayer ceramic capacitors is expanding not only for IT but also for industrial and electronic applications such as electric vehicles, and requires high reliability and durability. In order to manufacture a multilayer ceramic capacitor that functions stably in various extreme environments while having a ceramic body that is a brittle material, a structure or material that suppresses or buffers stress from external conditions or processing is required. When this is not sufficiently prevented, there may be a risk that problems such as deterioration of reliability or short circuits may occur.

Accordingly, a method of changing a structure or a material of an external electrode portion mounted on a board has been applied to protect a body from external shocks.

### SUMMARY

An aspect of the present disclosure is to provide a multilayer electronic component having enhanced bending strength and impact resistance.

An aspect of the present disclosure is to provide multilayer electronic components having improved reliability and durability.

However, the aspects of the present disclosure are not limited to the above-described contents, and may be more easily understood in the process of describing specific example embodiments of the present disclosure.

A multilayer electronic component according to some example embodiments of the present disclosure may include: a body including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; and an external electrode disposed on the body, and the external electrode may include a connection electrode layer disposed on the third and fourth surfaces and connected to the internal electrodes and including a conductive metal, a band electrode layer in contact with the connection electrode layer and disposed on a portion of the first and second surfaces and including a conductive polymer, and a plating layer disposed on the connection electrode layer and the band electrode layer, and the conductive metal may include at least one selected from the group consisting of palladium (Pd), silver (Ag), rhodium (Rh), and ruthenium (Ru).

One of the various effects of the present disclosure may be to enhance bending strength and impact resistance of a multilayer electronic component.

One of the various effects of the present disclosure may be to improved reliability and durability of a multilayer electronic component.

However, advantages and effects of the present application are not limited to the foregoing content and may be more easily understood in the process of describing a specific example embodiment of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 schematically illustrates an exploded perspective view illustrating a stack structure of internal electrodes;
FIG. 3 is a schematic cross-sectional view taken along line I-I' of FIG. 1;
FIG. 4 is a schematic cross-sectional view taken along line II-II' of FIG. 1; and
FIG. 5 schematically illustrates an enlarged view of region P of FIG. 3.

### DETAILED DESCRIPTION

Hereinafter, some example embodiments of the present disclosure will be described with reference to specific example embodiments and the attached drawings. The example embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

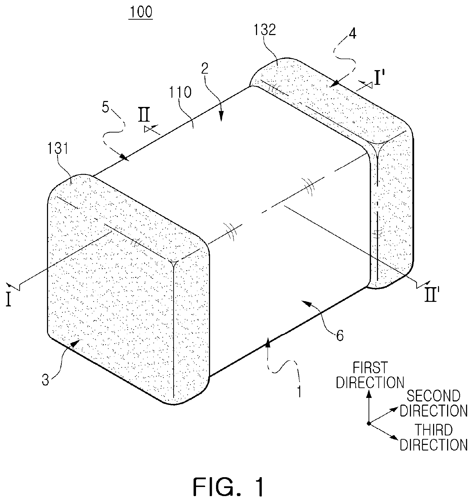

FIG. 1 is a perspective view schematically illustrating a multilayer electronic component according to an example embodiment of the present disclosure.

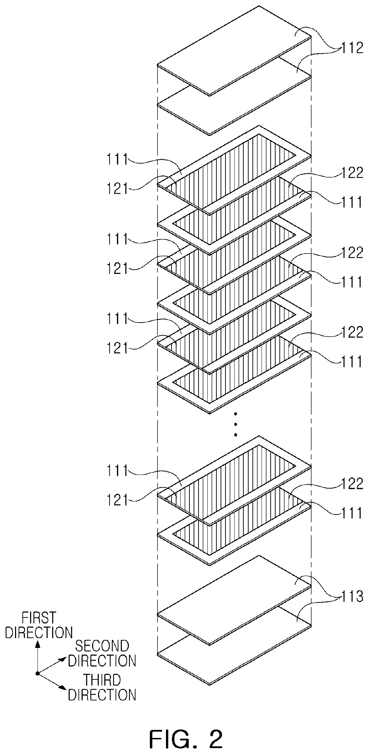

FIG. 2 schematically illustrates an exploded perspective view illustrating a stack structure of internal electrodes.

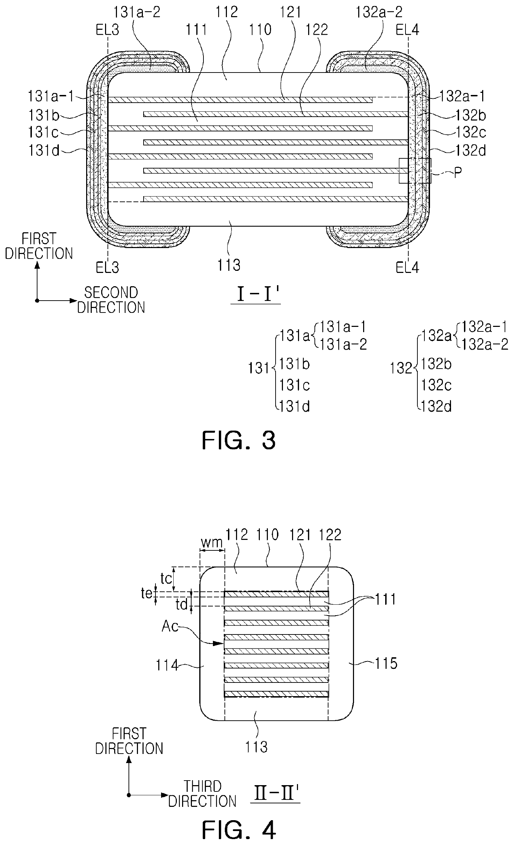

FIG. 3 is a schematic cross-sectional view taken along line I-I' of FIG. 1.

FIG. 4 is a schematic cross-sectional view taken along line II-II' of FIG. 1.

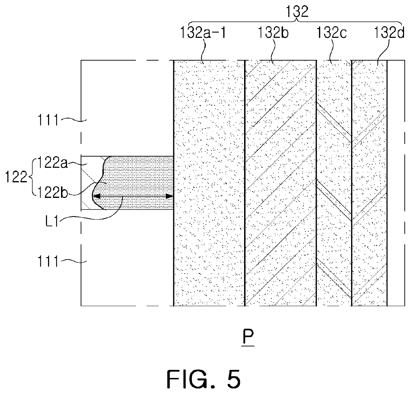

FIG. 5 schematically illustrates an enlarged view of region P of FIG. 3.

Hereinafter, a multilayer electronic component according to some example embodiments of the present disclosure will be described in detail with reference to FIGS. 1 to 5. However, as an example of a multilayer electronic component, a multilayer ceramic capacitor will be described, but the multilayer electronic component of the present disclosure may also be applied to various electronic products using dielectric compositions, such as inductors, piezoelectric elements, varistors, or thermistors.

A multilayer electronic component 100 according to some example embodiments of the present disclosure may include: a body 110 including a dielectric layer 111 and internal electrodes 121 and 122 arranged alternately with the dielectric layer 111 in a first direction, and including first and second surfaces 1 and 2 opposing each other in the first direction, third and fourth surfaces 3 and 4 connected to the first and second surfaces 1 and 2 and opposing each other in a second direction and fifth and sixth surfaces 5 and 6 connected to the first to fourth surfaces 1, 2, 3 and 4 and opposing each other in a third direction; and external electrodes 131 and 132 disposed on the body 110, and the external electrodes 131 and 132 may include connection electrode layers 131a-1 and 132a-1 disposed on the third and fourth surfaces 3 and 4 and connected to the internal electrodes 121 and 122 and including a conductive metal, band electrode layers 131a-2 and 132a-2 in contact with the connection electrode layers 131a-1 and 132a-1 and disposed on a portion of the first and second surfaces 1 and 2 and including a conductive polymer, and a plating layer disposed on the connection electrode layers 131a-1 and 132a-1 and the band electrode layers 131a-2 and 132a-2, and the conductive metal may include at least one selected from the group consisting of palladium (Pd), silver (Ag), rhodium (Rh), and ruthenium (Ru).

The body 110 may have dielectric layers 111 and internal electrodes 121 and 122 alternately stacked.

More specifically, the body 110 may include a capacitance formation portion Ac disposed inside the body 110, and including first internal electrodes 121 and second internal electrodes 122 alternately arranged to face each other with the dielectric layer 111 interposed therebetween to form capacitance.

There is no particular limitation on the specific shape of the body 110, but as illustrated, the body 110 may have a hexahedral shape or a shape similar thereto. Due to contraction of ceramic powder particles included in the body 110 during a sintering process, the body 110 may not have a hexahedral shape with entirely straight lines, but may have a substantially hexahedral shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction.

In a state in which a plurality of dielectric layers 111 included in the body 110 are sintered, boundaries between adjacent dielectric layers 111 may be integrated so as to be difficult to identify without using a scanning electron microscope (SEM).

The materials included in the dielectric layer 111 are not limited as long as sufficient electrostatic capacity may be obtained. In general, a perovskite (ABO₃)-based material may be used, and, for example, a barium titanate-based material, a lead composite perovskite-based material, or a strontium titanate-based material may be used. The barium titanate-based material may include BaTiO₃-based ceramic particles, and examples of the BaTiO₃-based ceramic particles may include BaTiO₃, and (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1), which is formed by partially employing calcium (Ca) and zirconium (Zr) in the process of preparing BaTiO₃.

Additionally, as the materials included in the dielectric layer 111, various ceramic additives, organic solvents, binders, dispersants, and the like, may be added to particles such as barium titanate (BaTiO₃) according to the purpose of the present disclosure.

A thickness td of the dielectric layer 111 is not limited.

In order to ensure reliability in a high voltage environment of the multilayer electronic component 100, the thickness of the dielectric layer 111 may be 10.0 um or less. Additionally, in order to achieve miniaturization and high capacity of the multilayer electronic component 100, the thickness of the dielectric layer 111 may be 3.0 um or less, and in order to more easily achieve miniaturization and high capacitance, the thickness of the dielectric layer 111 may be 1.0 µm or less, preferably 0.6 um or less, and more preferably 0.4 um or less.

Here, the thickness td of the dielectric layer 111 may refer to a thickness td of the dielectric layer 111 disposed between the first and second internal electrodes 121 and 122.

Meanwhile, the thickness td of the dielectric layer 111 may refer to a first directional size of the dielectric layer 111. Additionally, the thickness td of the dielectric layer 111 may refer to an average thickness td of the dielectric layer 111, and may refer to an average size of the dielectric layer 111 in the first direction.

The average size of the dielectric layer 111 in the first direction may be measured by scanning first and second directional cross-sections of the body 110 with a scanning electron microscope (SEM) of 10,000X magnification. More specifically, the average size of one dielectric layer 111 in the first direction may be an average value calculated by measuring the first directional size of one dielectric layer 111 at 10 areas spaced apart from each other at equal intervals in the second direction in the scanned image. The 10 areas spaced apart from each other at equal intervals may be designated in the capacitance formation portion Ac. Additionally, when the average value is measured by extending an average value measurement up to 10 dielectric layers 111, an average thickness of the dielectric layers 111 in the first directional may be further generalized

The internal electrodes 121 and 122 may be alternately stacked with the dielectric layer 111.

The internal electrodes may include a first internal electrode 121 and a second internal electrode 122, and the first and second internal electrodes 121 and 122 may be alternately arranged to face each other with the dielectric layer 111 interposed therebetween, and may be exposed to the third and fourth surfaces 3 and 4 of the body 110, respectively.

More specifically, the first internal electrode 121 may be spaced apart from the fourth surface 4 and may be exposed through the third surface 3, and the second internal electrode 122 may be spaced apart from the third surface 3 and may be exposed through the fourth surface 4. A first external electrode 131 may be disposed on the third surface 3 of the body 110 and may be connected to the first internal electrode 121, and a second external electrode 132 may be disposed on the fourth surface 4 of the body 110 and may be connected to the second internal electrode 122.

That is, the first internal electrode 121 may be connected to the first external electrode 131 without being connected to the second external electrode 132, and the second internal electrode 122 may be connected to the second external electrode 132 without being connected to the first external electrode 131. In this case, the first and second internal electrodes 121 and 122 may be electrically separated from each other by the dielectric layer 111 disposed therebetween.

Meanwhile, the body 110 may be formed by alternately stacking ceramic green sheets on which the first internal electrode 121 is printed and ceramic green sheets on which the second internal electrode 122 are printed, and then sintering the ceramic green sheets.

The materials included in the internal electrodes 121 and 122 are not particularly limited, and any materials having excellent electrical conductivity may be used. For example, the internal electrodes 121 and 122 may include one or more selected from the group consisting of nickel (Ni), copper (Cu), palladium (Pd), silver (Ag), gold (Au), platinum (Pt), tin (Sn), tungsten (W), titanium (Ti), and alloys thereof.

Additionally, the internal electrodes 121 and 122 may be formed by printing a conductive paste for internal electrodes including one or more selected from the group consisting of nickel (Ni), copper (Cu), palladium (Pd), silver (Ag), gold (Au), platinum (Pt), tin (Sn), tungsten (W), titanium (Ti) and alloys thereof on a ceramic green sheet. A printing method for the conductive paste for internal electrodes may be a screen-printing method or a gravure printing method, but the present disclosure is not limited thereto.

Meanwhile, a thickness te of the internal electrodes 121 and 122 is not limited.

In order to ensure the reliability of the multilayer electronic component 100 in a high voltage environment, the thickness te of the internal electrodes 121 and 122 may be 3.0 µm or less. Additionally, in order to achieve miniaturization and high capacitance of the multilayer electronic component 100, the thickness of the internal electrodes 121 and 122 may be 1.0 um or less, and in order to more easily achieve ultra-miniaturization and high capacitance, the thickness of the internal electrodes 121 and 122 may be 0.6 um or less, and more preferably 0.4 um or less.

Here, the thickness te of the internal electrodes 121 and 122 may refer to a first directional size of the internal electrodes 121 and 122. Additionally, the thickness te of the internal electrodes 121 and 122 may refer to an average thickness te of the internal electrodes 121 and 122, and may refer to an average size of the internal electrodes 121 and 122 in the first direction.

The average size of the internal electrodes 121 and 122 in the first direction may be measured by scanning images of the first and second directional cross-sections of the body 110 with a scanning electron microscope (SEM) of 10,000X magnification. More specifically, the average size of one internal electrode in the first direction may be an average value calculated by measuring the first directional size of one internal electrode at 10 areas spaced apart from each other at equal intervals in the second direction in the scanned image. The 10 areas spaced apart from each other at equal intervals may be designated in the capacitance formation portion Ac. Additionally, when the average value is measured by extending an average value measurement up to 10 internal electrodes, an average thickness of the internal electrode in the first directional may be further generalized.

Meanwhile, in some example embodiments of the present disclosure, the average thickness td of at least one of the plurality of dielectric layers 111 and the average thickness te of at least one of the plurality of internal electrodes 121 and 122 may satisfy 2×te < td.

In other words, the average thickness td of one dielectric layer 111 may be larger than twice the average thickness te of one internal electrode 121 or 122. Preferably, the average thickness td of the plurality of dielectric layers 111 may be larger than twice the average thickness te of the plurality of internal electrodes 121 and 122.

In general, high-voltage electronic components have a major issue due to reliability issues due to a decrease in breakdown voltage (BDV) in a high-voltage environment.

Accordingly, in order to prevent a decrease in the breakdown voltage under a high voltage environment, the average thickness td of the dielectric layer 111 may be made larger than twice the average thickness te of the internal electrodes 121 and 122, so that the thickness of the dielectric layer, which is a distance between internal electrodes, may be increased, thereby improving the breakdown voltage (BDV) characteristics.

When the average thickness td of the dielectric layer 111 is less than or equal to twice the average thickness te of the internal electrodes 121 and 122, an average thickness of the dielectric layer, which is a distance between the internal electrodes, may be thin, which may reduce the breakdown voltage, and a short circuit may occur between the internal electrodes.

Meanwhile, the body 110 may include cover portions 112 and 113 disposed on both end-surfaces of the capacitance formation portion Ac in the first direction.

Specifically, the body 110 may include a first cover portion 112 disposed on one surface of the capacitance formation portion Ac in the first direction, and a second cover portion 113 disposed on the other surface of the capacitance formation portion Ac in the first direction, and more specifically, the body 110 may include an upper cover portion 112 disposed above the capacitance formation portion Ac in the first direction, and a lower cover portion 113 disposed below the capacitance formation portion Ac in the first direction.

The upper cover portion 112 and the lower cover portion 113 may be formed by stacking a single dielectric layer 111 or two or more dielectric layers 111 on upper and lower surfaces of the capacitance formation portion Ac in the first direction, respectively, and may basically serve to prevent damage to the internal electrodes 121 and 122 due to physical or chemical stress.

The upper cover portion 112 and the lower cover portion 113 do not include the internal electrodes 121 and 122, and may include the same material as dielectric layer 111. That is, the upper cover portion 112 and the lower cover portion 113 may include a ceramic material, and may include, for example, a barium titanate (BaTiO₃)-based ceramic material.

Meanwhile, the thickness tc of the cover portions 112 and 113 is not limited.

However, in order to more easily achieve miniaturization and high capacitance of the multilayer electronic component, the thickness tc of the cover portions 112 and 113 may be 100 um or less, preferably 30 um or less, and more preferably 20 um or less in ultra-small products.

Here, the thickness tc of the cover portions 112 and 113 may refer to a first directional size of the cover portions 112 and 113 in the first direction. Additionally, the thickness tc of the cover portions 112 and 113 may refer to the average thickness tc of the cover portions 112 and 113, and may refer to an average size of the cover portions 112 and 113 in the first direction.

The average size of the cover portions 112 and 113 in the first direction may be measured by scanning images of the first and second directional cross-sections of the body 110 with a scanning electron microscope (SEM) of 10,000X magnification. More specifically, the average size thereof may refer to an average value calculated by measuring the first directional size at 10 areas equally spaced from each other in the second direction in the image obtained by scanning one cover portion.

Additionally, the average size of the cover portion in the first direction measured by the above-described method may have substantially the same size as the average size of the cover portion in the first direction in the first and third directional cross-sections of the body 110.

Meanwhile, the multilayer electronic component 100 may include side margin portions 114 and 115 disposed on both third directional end-surfaces of the body 110.

More specifically, the side margin portions 114 and 115 may include a first side margin portion 114 disposed on the fifth surface 5 of the body 110 and a second side margin portion 115 disposed on the sixth surface 6 of the body 110.

As illustrated, the side margin portions 114 and 115 may refer to a region between the end-surfaces of the first and second internal electrodes 121 and 122 in the third direction and a boundary surface of the body 110, based on the first and third directional cross-sections of the body 110.

The side margin portions 114 and 115 may be formed by applying a conductive paste to form the internal electrodes 121 and 122 except where the side margin portions 114 and 115 are to be formed on the ceramic green sheet applied to the capacitance formation portion Ac, and cutting the stacked internal electrodes 121 and 122 so that the internal electrodes 121 and 122 are exposed to the fifth and sixth surfaces 5 and 6 of the body 110 in order to suppress a step portion caused by the internal electrodes 121 and 122, and then stacking a single dielectric layer 111 or two or more dielectric layers 111 on both third directional end-surfaces of the capacitance formation portion Ac in the third direction.

The side margin portions 114 and 115 may basically serve to prevent damage to the internal electrodes 121 and 122 due to physical or chemical stress.

The first side margin portion 114 and the second side margin portion 115 do not include the internal electrodes 121 and 122 and may include the same material as the dielectric layer 111. That is, the first side margin portion 114 and the second side margin portion 115 may include a ceramic material, and may include, for example, a barium titanate (BaTiO₃) based ceramic material.

Meanwhile, a width wm of the first and second side margin portions 114 and 115 is not limited.

However, in order to more easily achieve miniaturization and high capacitance of the multilayer electronic component 100, the width wm of the side margin portions 114 and 115 may be 100 um or less, preferably 30 um or less, and more preferably 20 um or less in ultra-small products.

Here, the width wm of the side margin portions 114 and 115 may refer to a third directional size of the side margin portions 114 and 115. Additionally, the width wm of the side margin portions 114 and 115 may refer to the average width wm of the side margin portions 114 and 115, and may refer to an average size of the side margin portions 114 and 115 in the third direction.

The average size of the side margin portions 114 and 115 in the third direction may be measured by scanning images of the first and third directional cross-sections of the body 110 with a scanning electron microscope (SEM) of 10,000X magnification. More specifically, the average size thereof may refer to an average value calculated by measuring the third directional size at 10 areas equally spaced apart from each other in the first direction in an image obtained by scanning one side margin portion.

In some example embodiments of the present disclosure, a structure in which the ceramic electronic component 100 has two external electrodes 131 and 132 is described, but the number or shape of the external electrodes 131 and 132 may be changed depending on the shape of the internal electrodes 121 and 122 or other purposes.

The external electrodes 131 and 132 may be disposed on the body 110 and may be connected to the internal electrodes 121 and 122.

More specifically, the external electrodes 131 and 132 may be disposed on the third and fourth surfaces 3 and 4 of the body 110, respectively, and may include first and second external electrodes 131 and 132 connected to the first and second internal electrodes 121 and 122, respectively. That is, the first external electrode 131 may be disposed on the third surface 3 of the body and may be connected to the first internal electrode 121, and the second external electrode 132 may be disposed on the fourth surface 4 of the body and may be connected to the second internal electrode 122.

Additionally, the external electrodes 131 and 132 may be disposed to extend to a portion of the first and second surfaces 1 and 2 of the body 110, and may also be disposed to extend to a portion of the fifth and sixth surfaces 5 and 6 of the body 110. That is, the first external electrode 131 may be disposed on a portion of the first, second, fifth, and sixth surfaces 1, 2, 5 and 6 of the body 110 and disposed on the third surface 3 of the body 110, and the second external electrode 132 may disposed on a portion of the first, second, fifth and sixth surfaces 1, 2, 5 and 6 of the body 110 and disposed on the third surface 3 of the body 110.

Meanwhile, the external electrodes 131 and 132 may be formed by using any materials as long as the material has electrical conductivity, such as a metal, and the specific material may be determined in consideration of electrical properties, structural stability, and the like, and may further have a multilayer structure.

For example, the external electrodes 131 and 132 may include electrode layers 131a and 132a disposed on the body 110 and plating layers disposed on the electrode layers 131a and 132a.

Here, the electrode layers 131a and 132a may include connection electrode layers 131a-1 and 132a-1 disposed on the third and fourth surfaces 3 and 4 of the body 110 and connected to the internal electrodes 121 and 122 and including a conductive metal, and band electrode layers 131a-2 and 132a-2 in contact with the connection electrode layers 131a-1 and 132a-1 and disposed on a portion of the first and second surfaces 1 and 2 of the body 110 and including a conductive polymer.

In other words, the first external electrode 131 may include an electrode layer 131a disposed in contact with the body 110. More specifically, the electrode layer 131a may include a connection electrode layer 131a-1 disposed to be in contact with the third surface 3 of the body 110 and connected to the first internal electrode 121 and including a conductive metal, and a band electrode layer 131a-2 in contact with the connection electrode layer 131a-1 and disposed to contact a portion of the first and second surfaces 1 and 2 of the body 110 and including a conductive polymer.

The second external electrode 132 may include an electrode layer 132a disposed to be in contact with the body 110. More specifically, the electrode layer 132a may include a connection electrode layer 132a-1 disposed to be in contact with the fourth surface 4 of the body 110 and connected to the second internal electrode 122 and including a conductive metal, and a band electrode layer 132a-2 in contact with the connection electrode layer 132a-1 and disposed to contact a portion of the first and second surfaces 1 and 2 of the body 110 and including a conductive polymer.

The conductive metal included in the connection electrode layers 131a-1 and 132a-1 may include at least one selected from the group consisting of palladium (Pd), silver (Ag), rhodium (Rh), and ruthenium (Ru).

A method of forming the connection electrode layers 131a-1 and 132a-1 is not particularly limited thereto, but the connection electrode layers 131a-1 and 132a-1 may be formed by applying a salt solution including ions including a conductive metal, for example, at least one selected from the group consisting of palladium (Pd), silver (Ag), rhodium (Rh) and ruthenium (Ru), to the third and fourth surfaces 3 and 4 of the body and performing a heat treatment thereon.

As the connection electrode layers 131a-1 and 132a-1 are formed by applying a salt solution, the connection electrode layers 131a-1 and 132a-1 may have excellent bonding strength with the body 110 and with the first plating layers 131b and 132b to be described below.

Meanwhile, an average thickness of the connection electrode layers 131a-1 and 132a-1 in the first direction may be 0.1 um or more and 4 um or less.

As an average thickness of the connection electrode layers 131a-1 and 132a-1 satisfies 0.1 um or more and 4 um or less, sufficient electrical connectivity with the internal electrodes 121 and 122 may be secured, and the bonding strength with the first plating layers 131b and 132b described later may be excellent.

When the average thickness of the connection electrode layers 131a-1 and 132a-1 is less than 0.1 um, since a sufficient thickness is not formed, the bonding strength with the first plating layers 131b and 132b may deteriorate, and thus, there may be a risk that lifting or delamination of the external electrodes 131 and 132 may occur.

When the average thickness of the connection electrode layers 131a-1 and 132a-1 is greater than 4 um, the equivalent series resistance (ESR) may increase, which may make it difficult to achieve miniaturization of the multilayer electronic component 100.

In the present disclosure, an average thickness of the connection electrode layers 131a-1 and 132a-1 may correspond to an average size of the connection electrode layers 131a-1 and 132a-1 in the second direction. For example, when the first and second directional cross-sections of the multilayer electronic component 100 is observed with a scanning electron microscope (SEM), the average thickness thereof may refer to an average value obtained by measuring second directional sizes of the connection electrode layers 131a-1 and 132a-1 at three arbitrary points spaced apart from each other in the first direction, but the present disclosure is not particularly limited thereto. Here, the three arbitrary points spaced apart from each other in the first direction may be selected from an extension line (extension surface) of the capacitance formation portion Ac in which the internal electrodes are disposed, in the second direction.

As the connection electrode layers 131a-1 and 132a-1 are formed with an ionic salt solution and heat treatment is performed, the conductive metal of the connection electrode layers 131a-1 and 132a-1 may diffuse into the internal electrodes 121 and 122.

Accordingly, the internal electrodes 121 and 122 may include diffusion portions 121b and 122b that are regions in contact with the connection electrode layers 131a-1 and 132a-1 and including the conductive metal.

That is, the internal electrodes 121 and 122 may include non-diffusion portions, regions not including a conductive metal of the connection electrode layers , and diffusion portions, regions including a conductive metal of the connection electrode layers 131a-1 and 132a-1.

Meanwhile, in the present disclosure, the non-diffusion portion (not illustrated) and the diffusion portion (not illustrated) of the first internal electrode 121 are not illustrated. Additionally, in FIG. 5, only the non-diffusion portion 122a and the diffusion portion 122b of the second internal electrode 122 are illustrated using the second internal electrode 122 and the second external electrode 132 as an example, but it will be obvious to those skilled in the art that the same explanation as described above may be understood for the non-diffusion portion (not illustrated) and the diffusion portion (not illustrated) of the first internal electrode 121.

In this case, the diffusion portions of the internal electrodes may include an alloy between the main component metal of the internal electrodes 121 and 122 and the conductive metal of the connection electrode layers 131a-1 and 132a-1.

In the present disclosure, the "main component" may refer to a component that occupies a relatively large weight ratio as compared to other components, and may refer to a component that is 50 wt% or more based on the weight of an entire composition or an entire dielectric layer.

For example, in the case in which the internal electrodes 121 and 122 include nickel (Ni) as a main component and the connection electrode layers 131a-1 and 132a-1 include palladium (Pd), as the conductive metal diffuses into the internal electrodes 121 and 122 during the sintering process of the connection electrode layers 131a-1 and 132a-1 in a salt solution state, the internal electrodes 121 and 122 may form diffusion portions, and the diffusion portions may include a nickel-palladium (Ni-Pd) alloy as an alloy reaction proceeds between nickel (Ni), the main component metal of the internal electrodes 121 and 122, and palladium (Pd) diffused from the connection electrode layers 131a-1 and 132a-1.

The diffusion portions may include an alloy comprising the main component metal of the internal electrodes 121 and 122 and the conductive metal of the connection electrode layers 131a-1 and 132a-1, which may lower an hydrogen diffusion coefficient and may prevent penetration of external moisture and hydrogen, or the diffusion portions 122a and 122b may prevent penetration of a plating solution to suppress deterioration of the internal electrodes 121 and 122, thereby preventing the Equivalent Series Resistance (ESR) from increasing. Additionally, the bonding strength between the internal electrodes 121 and 122 and the connection electrode layers 131a-1 and 132a-2 may be improved to suppress an occurrence of lifting or delamination between the external electrodes 131 and 132 and the body 110, and may also improve electrical connectivity.

Here, the diffusion portions may be regions of the internal electrode, each portion having an average size within 6 um in an inner direction (the second direction) of the body 110 from a point in which the internal electrodes 121 and 122 and the connection electrode layers 131a-1 and 132a-1 are in contact with each other.

In other words, the diffusion portions may be a region having an average size within 6 um in the inner direction of the body 110 from the point in which the internal electrodes 121 and 122 and the connection electrode layers 131a-1 and 132a-1 are in contact with each other based on the second direction, and an average size of the diffusion portions in the second direction may be 6 um or less on average, and an average length of the diffusion portions may be 6 µm or less.

As the diffusion portions are formed within an average size of 6 µm in the inner direction of the body 110 from the point in which the internal electrodes 121 and 122 and the connection electrode layers 131a-1 and 132a-1 are in contact with each other, the hydrogen diffusion coefficient may be lowered to more effectively prevent external moisture and hydrogen penetration, or the diffusion portions may more effectively prevent penetration of the plating solution, thereby suppressing deterioration of the internal electrodes 121 and 122 and preventing the equivalent series resistance (ESR) from increasing.

A lower limit of the average size of the diffusion portions is not particularly limited, but may be, for example, 0.1 um or more.

Here, the point in which the internal electrodes 121 and 122 and the connection electrode layers 131a-1 and 132a-1 are in contact with each other does not need to be parallel to the surface of the body 110, and may correspond to a point in which the internal electrodes 121 and 122 are introduced into an interior of the body 110 and the connection electrode layers 131a-1 and 132a-1 also penetrate into the interior of the body 110 and come into contact. Alternatively, when the internal electrodes 121 and 122 are shaped to protrude to the outside of the body 110, the point may correspond to a point in which the internal electrodes 121 and 122 protrude to the outside of the body 110 to come into contact with the connection electrode layers 131a-1 and 132a-1, but the present disclosure is not particularly limited thereto.

As a method of measuring an average size (average length) of the diffusion portions in the second direction, for example, the average size may be obtained by calculating an average of a maximum value and a minimum value of a second directional average size L1 of the diffusion portions, or may be obtained by calculating an average of values measured in the second direction at three arbitrary points spaced from each other in the first direction (thickness direction) . The size in the second direction can be obtained by calculating the average of the measured values. Alternatively, after extracting a region of the diffusion portions through a program from an image obtained using a scanning electron microscope (SEM), a method of calculating an average of a second directional size may be used in the program, but the present disclosure is not particularly limited thereto.

When the diffusion portions 121b and 122b exceed an average size of 6 um in the inner direction of the body 110 from the point in which the internal electrodes 121 and 122 and the connection electrode layers 131a-1 and 132a-1 are in contact with each other, due to excessive diffusion of the conductive metal included in the connection electrode layers 131a-1 and 132a-1, there may be a risk that electrical connectivity may deteriorate or equivalent series resistance (ESR) may increase, which may deteriorate electrical characteristics.

In some example embodiments of the present disclosure, the external electrodes 131 and 132 may not include glass. However, the present disclosure is not particularly limited thereto, and when the connection electrode layers 131a-1 and 132a-1 do not include glass, the band electrode layers 131a-2 and 132a-2 may include glass, and when the band electrode layers 131a-2 and 132a-2 do not include glass, the connection electrode layers 131a-1 and 132a-1 may include glass, and both the connection electrode layers 131a-1 and 132a-1 and the band electrode layers 131a-2 and 132a-2 may not include glass. Detailed information thereof will be described below.

The connection electrode layers 131a-1 and 132a-1 may not include glass.

For a typical sintered electrode, a method is used to improve the adhesion to the body by adding glass to a paste for external electrodes, but when forming the connection electrode layers 131a-1 and 132a-1 by applying an ionic salt solution, the bonding strength with the body 110 may be excellent even without adding glass, so that adding glass may not be an essential element, but glass may be added as needed.

The conductive polymer included in the band electrode layers 131a-2 and 132a-2 may include at least one selected from the group consisting of polypyrrole, polyaniline, polythiophene, and poly(3,4-ethylenedioxythiophene) polystyrene sulfonate (PEDOT:PSS).

As the band electrode layers 131a-2 and 132a-2 include a conductive polymer, the band electrode layers 131a-2 and 132a-2 may serve to absorb external shocks, thereby improving bending strength and prevent the equivalent series resistance (ESR) from increasing.

A method of forming the band electrode layers 131a-2 and 132a-2 is not particularly limited thereto, but the band electrode layers 131a-2 and 132a-2 may be formed in a manner in which a solution including at least one of conductive polymers, such as polypyrrole, polyaniline, polythiophene, and poly(3,4-ethylenedioxythiophene) polystyrene sulfonate (PEDOT:PSS) is formed on a portion of the first and second surfaces 1 and 2 of the body 110 using a inkjet method and the like, and may be subject to oven drying in a temperature range of 100^{°}C or more and 120^{°}C or less.

Here, the solution including the conductive polymer may further include a silane coupling agent and a binder.

Additionally, the band electrode layers 131a-2 and 132a-2 may not include glass.

For a typical sintering electrode, a method of improving the bonding strength with the body 110 is used by adding glass to a paste for external electrodes, but in the case of the band electrode layers 131a-2 and 132a-2 including a conductive polymer, as additives such as silane coupling agents or binders are included, the adhesion to the body 110 may be excellent even without adding glass, so that adding glass may not be an essential element, but glass may be added as needed.

Meanwhile, the average thickness of the band electrode layers 131a-2 and 132a-2 in the first direction may be 0.1 um or more and 4 um or less.

As the average thickness of the band electrode layers 131a-2 and 132a-2 in the first direction satisfies 0.1 µm or more and 4 um or less, the bending stress applied to the multilayer electronic component 100 may be sufficiently absorbed, thereby securing sufficient bending strength to prevent an occurrence of cracks.

When the average thickness of the band electrode layers 131a-2 and 132a-2 in the first direction is less than 0.1 um, the bending strength may not be sufficiently improved due to failure to form a sufficient thickness, and when the average thickness of the band electrode layers 131a-2 and 132a-2 is more than 4 um, the equivalent series resistance (ESR) may increase, and it may be difficult to achieve miniaturization of the multilayer electronic component 100.

In the present disclosure, the average thickness of the band electrode layers 131a-2 and 132a-2 may correspond to an average size of the connection electrode layers 131a-1 and 132a-1 in the first direction. For example, when the first and second directional cross-section of the multilayer electronic component 100 is observed with the scanning electron microscope (SEM), the average thickness may refer to an average value of measuring the first directional size of the band electrode layers 131a-2 and 132a-2 at three arbitrary points spaced apart from each other in the second direction, but the present disclosure is not particularly limited thereto. Here, the three arbitrary points spaced apart in the second direction may refer to a point in contact with one surface of the body 110, and may be selected from a body region having substantially parallel surfaces rather than a curved edge region.

Meanwhile, in some example embodiments of the present disclosure, the connection electrode layers 131a-1 and 132a-1 may not be disposed between an extension line EL3 on the third surface and an extension line EL4 on the fourth surface, and the band electrode layers 131a-2 and 132a-2 may be disposed between the extension line EL3 on the third surface and the extension line EL4 on the fourth surface.

This may be achieved by a method of first forming the band electrode layers 131a-2 and 132a-2 on a portion of the first and second surfaces 1 and 2, and then polishing the band electrode layers 131a-2 and 132a-2 formed outside of the extension line EL3 on the third surface and the extension line EL4 on the fourth surface using a sand blasting, and forming the connection electrode layers 131a-1 and 132a-1 on the third and fourth surfaces 3 and 4, but the present disclosure is not particularly limited thereto.

More specifically, after forming band electrode layers 131a-2 and 132a-2 on a portion of the first and second surfaces 1 and 2 of the body 110, unnecessary band electrode layers 131a-2 and 132a-2 formed on the third and fourth surfaces 3 and 4 of the body 110 may be polished and removed. Additionally, sulfuric acid and surfactant treatment may be performed to remove organic substances remaining on the polished surface.

Next, after washing away the sulfuric acid and surfactant, oxide regions of the internal electrodes 121 and 122 exposed to the outside of the body 110 may be removed, and hydrochloric acid aqueous solution treatment may be performed to increase the amount of conductive metal precipitation in the connection electrode layers 131a-1 and 132a-1.

Next, after washing away the hydrochloric acid solution, the third and fourth surfaces 3 and 4 of the body 110 are immersed in an ionic salt solution so as to form the connection electrode layers 131a-1 and 132a-1. In this case, sufficient ion circulation may be achieved through stirring of the ionic salt solution, thereby growing the connection electrode layers 131a-1 and 132a-1 having a substantially uniform thickness.

For this reason, as the connection electrode layers 131a-1 and 132a-1 are not disposed between the extension line EL3 on the third surface and the extension line EL4 on the fourth surface and the band electrode layers 131a-2 and 132a-2 are disposed between the extension line EL3 of the third surface and the extension line EL4 of the fourth surface, bonding strength with the first plating layers 131b and 132b may be improved, and impact resistant may be provided while blocking external moisture penetration paths.

The plating layers 131b, 132b, 131c, 132c, 131d and 132d may serve to improve mounting characteristics.

The types of plating layers 131b, 132b, 131c, 132c, 131d and 132d are not particularly limited, and may be plating layers 131b or 132b as a single layer, including one or more selected from the group consisting of copper (Cu), nickel (Ni), tin (Sn), silver (Ag), palladium (Pd) and alloys thereof, and may be a plurality of plating layers 131b and 132b, and for example, two-layered plating layers 131b, 132b, 131c and 132c or three-layered plating layers 131b, 132b, 131c, 132c, 131d and 132d may be formed.

For more specific examples of the plating layers 131b, 132b, 131c, 132c, 131d and 132d, the plating layers 131b, 132b, 131c, 132c, 131d and 132d may include first plating layers 131b and 132b disposed on the connection electrode layers 131a-1 and 132a-1 and the band electrode layers 131a-2 and 132a-2 and including copper (Cu), second plating layers 131c and 132c disposed on the first plating layers 131b and 132b and including nickel (Ni), and third plating layers 131d and 132d disposed on the second plating layers 131c and 132c and including tin (Sn).

Here, an average thickness of the first plating layers 131b and 132b may be 5 um or more and 8 um or less, an average thickness of the second plating layers 131c and 132c may be 2 um or more and 4 um or less, and an average thickness of the third plating layers 131d and 132d may be 2 µm or more and 4 um or less.

In the present disclosure, the average thickness of the first to third plating layers 131b, 132b, 131c, 132c, 131d and 132d may correspond to an average size in the second direction on the third and fourth surfaces 3 and 4 of each of the first to third plating layers 131b, 132b, 131c, 132c, 131d and 132d or an average size in the first direction on a portion on the first and second surfaces 1 and 2.

For example, when the first and second directional cross-sections of the multilayer electronic component 100 is observed with the scanning electron microscope (SEM), the average thickness thereof may refer to an average value obtained by measuring second directional sizes of each of the first to third plating layers 131b, 132b, 131c, 132c, 131d and 132d at three arbitrary points spaced apart from each other in the first direction, but the present disclosure is not particularly limited thereto. Here, the three arbitrary points spaced apart from each other in the first direction may be selected from an extension line (extension surface) of the capacitance formation portion Ac in which the internal electrodes are disposed, in the second direction.

However, the present disclosure is not particularly limited thereto, and in order to further generalize the average thickness of each of the first to third plating layers 131b, 132b, 131c, 132c, 131d and 132d, the average thickness may be calculated to include an average value of in the first direction of each of the first to third plating layers 131b, 132b, 131c, 132c, 131d and 132d disposed on a portion of the first and second surfaces 1 and 2 of the body, so that the average thickness of each of the first to third plating layers 131b, 132b, 131c, 132c, 131d and 132d may be generalized.

The average size of each of the first to third plating layers 131b, 132b, 131c, 132c, 131d and 132d in the first direction may be, for example, an average value obtained by measuring the first directional sizes of each of the first to third plating layers 131b, 132b, 131c, 132c, 131d and 132d from the three arbitrary points spaced apart from each other in the second direction, when the first and second directional cross-sections of the multilayer electronic component 100 is observed with the scanning electron microscope (SEM), but the present disclosure is not particularly limited thereto. Here, the three arbitrary points spaced apart from each other in the second direction may refer to a point in contact with one surface of the body 110 or a point on an extension of the point, and may be selected from a body region having substantially parallel surfaces rather than a curved edge region.

As an average thickness of the first plating layers 131b and 132b satisfies the range from 5 um or more and 8 um or less, external moisture may be effectively prevented from penetrating into the connection electrode layers 131a-1 and 132a-1 and the band electrode layers 131a-2 and 132a-2, and it may be possible to suppress penetration of a plating solution to form the second and third plating layers, and miniaturization and high capacitance of the multilayer electronic component 100 may be achieved by reducing a thickness of the external electrodes 131 and 132.

Additionally, as an average thickness of the second plating layers 131c and 132c satisfies the range from 2 um or more and 4 um or less, external moisture may be effectively prevented from penetrating into the connection electrode layers 131a-1 and 132a-1 and the band electrode layers 131a-2 and 132a-2, and penetration of the plating solution for forming the third plating layer may be suppressed.

Additionally, as the average thickness of the third plating layers 131d and 132d satisfies the range from 2 µm or more and 4 um or less, external moisture may be effectively prevented from penetrating into the connection electrode layers 131a-1 and 132a-1 and the band electrode layers 131a-2 and 132a-2, and bonding strength with soldering may be excellent when mounting the plating layers on a board.

There is no need to specifically limit the size of the multilayer electronic component 100.

However, in order to achieve both miniaturization and high capacitance, the thicknesses of the dielectric layer and the internal electrodes must be thinned to increase the number of stacks, so that the effect according to the present disclosure can be more noticeable in a multilayer electronic component 100 having a size of 3216 (length × width: 3.2 mm × 1.6 mm) or less.

Although the example embodiments of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression "an example embodiment" and "some embodiments" used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component (100), comprising:
a body (110) including a dielectric layer (111) and internal electrodes (121, 122) alternately disposed with the dielectric layer (111) in a first direction, and including first and second surfaces (1, 2) opposing each other in the first direction, third and fourth surfaces (3, 4) connected to the first and second surfaces (1, 2) and opposing each other in a second direction, and fifth and sixth surfaces (5, 6) connected to the first to fourth surfaces (1, 2, 3, 4) and opposing each other in a third direction; and
external electrodes (131, 132) disposed on the body (110),
wherein the external electrodes (131, 132) include a connection electrode layer (131a-1, 132a-1) disposed on the third and fourth surfaces (3, 4) and connected to the internal electrodes (121, 122) and including a conductive metal, a band electrode layer (131a-2, 132a-2) being in contact with the connection electrode layer (131a-1, 132a-1), disposed on a portion of the first and second surfaces (1, 2) and including a conductive polymer, and a plating layer disposed on the connection electrode layer and the band electrode layer, and
the conductive metal includes at least one selected from the group consisting of palladium (Pd), silver (Ag), rhodium (Rh), and ruthenium (Ru).

2. The multilayer electronic component (100) according to claim 1, wherein the internal electrodes (121, 122) include a diffusion portion (121b, 122b), which is a region being in contact with the connection electrode layer (131a-1, 132a-1) and including the conductive metal.

3. The multilayer electronic component (100) according to claim 2, wherein the diffusion portion (121b, 122b) includes an alloy comprising a main component metal of the internal electrodes (121, 122) and the conductive metal.

4. The multilayer electronic component (100) according to claim 2, wherein the diffusion portion (121b, 122b) is a region having an average size within 6 um in an inner direction of the body (110) from a point in which the internal electrodes (121, 122) and the connection electrode layer (131a-1, 132a-1) are in contact with each other.

5. The multilayer electronic component (100) according to claim 1, wherein the connection electrode layer (131a-1, 132a-1) does not include glass.

6. The multilayer electronic component (100) according to claim 1, wherein the conductive polymer includes at least one selected from the group consisting of polypyrrole, polyaniline, polythiophene, and poly(3,4-ethylenedioxythiophene) polystyrene sulfonate (PEDOT:PSS).

7. The multilayer electronic component (100) according to claim 1, wherein the band electrode layer (131a-2, 132a-2) does not include glass.

8. The multilayer electronic component (100) according to claim 1, wherein the external electrodes (131, 132) do not include glass.

9. The multilayer electronic component (100) according to claim 1, wherein an average thickness of each of the connection electrode layer (131a-1, 132a-1) in the second direction and the band electrode layer (131a-2, 132a-2) in the first direction is 0.1 um or more and 4 um or less.

10. The multilayer electronic component (100) according to claim 1, wherein the connection electrode layer (131a-1, 132a-1) is not disposed between an extension line (EL3) of the third surface and an extension line (EL4) of the fourth surface.

11. The multilayer electronic component (100) according to claim 1, wherein the band electrode layer (131a-2, 132a-2) is disposed between an extension line (EL3) of the third surface and an extension line (EL4) of the fourth surface.

12. The multilayer electronic component (100) according to claim 1, wherein the plating layer includes a first plating layer (131b, 132b) comprising copper (Cu).

13. The multilayer electronic component (100) according to claim 1, wherein the plating layer includes a first plating layer (131b, 132b) disposed on the connection electrode layer (131a-1, 132a-1) and the band electrode layer (131a-2, 132a-2) and including copper Cu, a second plating layer (131c, 132c) disposed on the first plating layer (131b, 132b) and including nickel (Ni), and a third plating layer (131d, 132d) disposed on the second plating layer (131c, 132c) and including tin (Sn).

14. The multilayer electronic component (100) according to claim 13, wherein an average thickness of the first plating layer (131b, 132b) is 5 um or more and 8 um or less, and an average thickness of each of the second plating layer (131c, 132c) and the third plating layer (131d, 132d) is 2 um or more and 4 um or less.
